(19) Europäisches Patentamt
European Patent Office
Office européen des brevets

(11) Veröffentlichungsnummer: **0 137 459**
**B2**

(12) **NEUE EUROPÄISCHE PATENTSCHRIFT**

(45) Veröffentlichungstag der neuen Patentschrift: **24.10.90**

(51) Int. Cl.$^5$: **C 09 D 5/44,** C 08 G 59/10

(21) Anmeldenummer: **84111929.0**

(22) Anmeldetag: **05.10.84**

(54) **Kathodisch abscheidbares wässriges Elektrotauchlack-Überzugsmittel und dessen Verwendung.**

(30) Priorität: **08.10.83 DE 3336749**

(43) Veröffentlichungstag der Anmeldung:
**17.04.85 Patentblatt 85/16**

(45) Bekanntmachung des Hinweises auf die Patenterteilung:
**08.04.87 Patenblatt 87/15**

(45) Bekanntmachung des Hinweises auf die Entscheidung über den Einspruch:
**24.10.90 Patentblatt 90/43**

(84) Benannte Vertragsstaaten:
**AT BE CH DE FR GB IT LI NL SE**

(56) Entgegenhaltungen:
**EP-A-0 004 090**
**EP-A-0 025 554**
**EP-A-0 057 389**
**EP-A-0 080 165**
**DE-A-3 109 282**
**FR-A-2 275 497**
**US-A-4 252 703**

**Versamid, Merkblatt der Schering AG, Mai 1966**

(73) Patentinhaber: **Herberts Gesellschaft mit beschränkter Haftung**
**Christbusch 25**
**D-5600 Wuppertal 2 (DE)**

(72) Erfinder: **Patzschke, Hans-Peter, Dr.**
**Am Heckendorn 71**
**D-5600 Wuppertal 2 (DE)**
Erfinder: **Goebel, Armin, Chemie Ing.**
**Osteroder Str. 27**
**D-5600 Wuppertal 2 (DE)**
Erfinder: **Klein, Klausjörg, Dipl. Ing.**
**Richard-Strauss-Allee 33**
**D-5600 Wuppertal 2 (DE)**

(74) Vertreter: **Türk, Gille, Hrabal**
**Brucknerstrasse 20**
**D-4000 Düsseldorf 13 (DE)**

**EP 0 137 459 B2**

Courier Press, Leamington Spa, England.

**Beschreibung**

Die Erfindung betrifft ein kathodisch abscheidbares wäßriges Elektrotauchlack-Überzugsmittel, das Pigmente, Füllstoffe, Korrosionsschutzinhibitoren, Lackhilfsmittel, gegebenenfalls Katalysatoren und in einer Menge bis zu 20 Gew.%, bezogen aus das Gesamtgewicht des Überzugsmittels, organische Lösungsmittel und als Kunstharz-Bindemittel enthält.

(A) 55 bis 95 Gew.%, bezogen auf die Gesamtmenge des Kunstharz-Bindemittels, eines Hydroxyl- und tertiäre Aminogruppen sowie gegebenenfalls primäre und/oder sekundäre Aminogruppen enthaltenden Kunstharz-Bindemittels mit einer mittleren Molmasse ($\overline{M}n$) von 500 bis 20 000, das einen $pK_b$-Wert von 3 bis 7 und eine Hydroxylzahl von 50 bis 400 und eine Aminzahl von 30 bis 150 aufweist, und welches durch Protonisieren mit Säure wasserlöslich gemacht werden kann, und

(B) 5 bis 45 Gew.% eines umesterungs- und/oder umamidierungsfähige Estergruppen enthaltenden Vernetzungsmittel mit einer mittleren Molmasse ($\overline{M}n$) von 350 bis 5000, das eine Esterzahl von reaktiven endständigen Estergruppen von 30 bis 500, bevorzugt von 100 bis 250, aufweist, wobei die Estergruppen in neutralem wäßrigen Medium weitgehend stabil sind, jedoch im basischen Medium bei Temperaturen über 140°C gegenüber Hydroxyl-, primären und/oder sekundären Aminogruppen des Kunstharz-Bindemittels A reaktionsfähig sind.

Die Erfindung betrifft auch die Verwendung dieses Überzugsmittels zur Herstellung von kathodisch abgeschiedenen Überzügen auf elektrisch leitenden Substraten.

Elektrotauchlack-Überzugsmittel der vorstehend beschriebenen Art, ohne Modifikation gemäß kennzeichnendem Teil des untenstehenden Anspruchs sind aus der EP—A—4090 bekannt.

Es ist bekannt, daß verschiedene organische Bindemittelsysteme, die durch Salzbildung in einem wäßrigen Medium dispergiert sind, auf elektrophoretischem Wege auf einen leitenden metallischen Gegenstand, der in das wäßrige Bad getaucht wird, abgeschieden werden können. Als Eletrophoreselacke mit hohem Umgriff und sehr guten Korrosionsschutz auch auf nicht phosphatierten Blechen werden dabei heute in der Praxis vorwiegend an der Kathode abscheidbare Bindemittel verwendet. Sie werden besonders aus Epoxidhärzen auf Basis Bisphenol A und Aminen oder Aminoalkoholen hergestellt. Die thermische Vernetzung dieser Bindemittel erfolgt nach unterschiedlichen Verfahren, z.B. durch Einbau von blockierten Isocyanaten (DE—A—20 57 799, DE—A—21 31 060, DE—A—22 52 536, DE—A—22 65 195, DE—A—23 63 074, DE—A—26 34 211) oder durch Umamidierungs- oder Umesterungsvefahren (EP—A—004 090, EP—A—012 463, EP—A—040 867, EP—A—066 859, EP—A—082 291, DE—A—31 03 642, DE—A—33 15 469).

Die Harzsysteme mit blockierten Isocyanaten haben generell den Nachteil, daß sie bei den notwendigen hohen Härtungstemperaturen große Einbrennverluste haben und damit die Umwelt verunreinigen. Niedrigmolekulare Alkohole, wie Methanol und Ethanol, können nich als Verkappungsmittel eingesetzt werden, weil deren Urethane unterhalb etwa 250°C stabil sind. Die für die Umamidierungs- und Umesterungsverfharen eingesetzten Vernetzungsmittel haben zwar niedrige Abspaltverluste, die Bindemittelsysteme zeigen jedoch noch Nachteile, die verbesserungsbedürftig sind. Hierzu gehören z.B. die Haftungseigenschaften zu den folgenden Schichten wie PVC oder Füller, die Elastizitätseigenschaften und/oder die Erhöhung der Schichtdicke.

Der Erfindung liegt die Aufgabe zugrunde, Lackkunstharze als Basisharze sowie wäßrige Elektrotauchlack-Überzugsmittel zu finden, die bezüglich der beschriebenen Nachteile eine Verbesserung bringen.

Gegenstand der Erfindung ist das in den Patentansprüchen beschriebene kathodisch abscheidbare wäßrige Elektrotauchlack-Überzugsmittel und dessen Verwendung.

Das Basisharz (A) der Bindemittelmischung wird üblicherweise aus expoxidgruppenhaltigen Harzen mit vorzugsweise endständigen Epoxidgruppen aus den Gruppen Polyglycidylether, Polyglycidylester und Polyglycidylamine durch Umsetzung mit sekundären und primären Aminen erhalten. Diese können zusätzlich vom Alkylrest durch mindestens eine primäre oder sekundäre Hydroxylgruppe, durch die Dialkylaminogruppe oder durch eine primäre Aminogruppe, die durch Ketiminbildung vorübergehend geschützt wird, modifiziert sein.

Das basische Basisharz (A) kann zusätzlich zum Senken der Aminzahl mit Polycarbonsäuren oder Polyalkoholen modifiziert sein. Aliphatische, cycloaliphatische und/oder aromatische Polycarbonsäuren verschiedener Kettenlänge sind beispielsweise Adipinsäure, Sebacinsäure, Isophthalsäure oder dimere Fettsäure. Als hydroxylgruppenhaltige Verbindungen werden niedrigmolekalare Polyole wie Neopentylglykol, Bis-ethoxyliertes Neopentylglykol, Hydroxypivalinsäure-neopentylglykolester, Hexandiol-1,6, Bis-(hydroxymethyl)cyclohexan, 1,1-Iso-propyliden-bis-(p-phenoxy)-2-propanol ebenso eingesetzt wie Polyglykolether, Polyesterpolyole, Polyetherpolyole, Polycaprolactonpolyole oder Polycaprolactampolyole verscheidener Funktionalität und Molekulargewicht.

Unter Polyglycidylether im Rahmen dieser Erfindung werden vorzugsweise solche Polyglycidylether der allgemeinen Formel

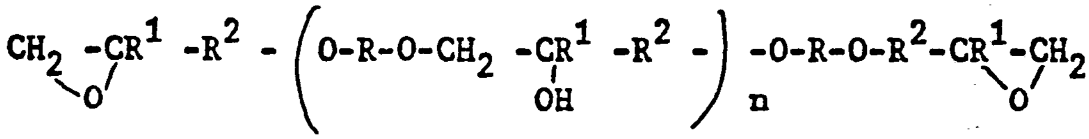

mit

R = 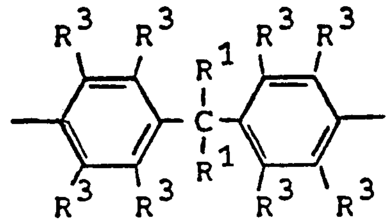

$R^1$ = —H oder —$C_mH_{2m+1}$
$R^2$ = —$(CR^1_2)_m$—, bevorzugt —$CH_2$—
$R^3$ = —$R^1$ Halogen oder bevorzugt —H
n = 0 bis 6
m = 1 bis 8

verstanden. Diese Polyglycidylether haben eine zahlenmittlere Molmasse von etwa 340 bis 5000 und dementsprechend ein Epoxidäquivalentgewicht von 170 bis 2500. Die Epoxidhärze können hydriert, teilweise hydriert oder in Gemischen mit unterschiedlicher Struktur und Molmasse eingesetzt werden.

Als aminogruppenhaltige Verbindungen können in bekannter Weise verwendet werden: Dialkylamine wie Diethylamin oder Ethylhexylamin, Dialkanolamine wie Diethanolamin, Diisopropanolamin oder N-Methylethanolamin. Zum Einführen von primären und/oder sekundären Aminogruppen in das organische Basisharz (A) können die epoxidgruppenhaltigen Harze auch mit amino- und/oder hydroxylgruppenhaltigen Ketiminen oder Aldiminen umgesetzt werden. Bei den bevorzugten Ketiminen handelt es sich um Umsetzungsprodukte aus Ketonen und sekundäre Aminogruppen enthaltenden Alkylaminen der allgemeinen Struktur

$R^1$—NH—$R^2$—$NH_2$

Beim Einsatz von primären Aminen wie Octylamin, Monoethanolamin, Dimethylaminopropylamin, Diethylaminoethylamin, Dimethylaminoneopentylamin oder Methoxypropylamin reagiert das Amin mit der Epoxidgruppe in Abhängigkeit von den angebotenen stöchiometrischen Verhältnissen mit ein bis zwei Epoxidgruppen unter Molekülvergrößerung.

Wesentliche Eigenschäftsverbesserungen werden überraschenderweise gefunden, wenn gemäß der Erfindung Harzmoleküle der Komponente (A) mindestens ein molekülvergroßendes Diamin der Formel

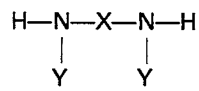 (I)

eingebaut enthalten, worin das Symbol Y für $C_mH_{2m+1}$ (m = 1 bis 8) oder einen zum Defunktionalisieren verwendeten organischen Rest, der durch Umsetzung der primären Aminogruppe mit Monoepoxiden gebildet wird, steht und das Symbol X eine Molekülgruppierung mit mindestens einer Harnstoffgruppe darstellt, wobei diese Gruppen an die Stickstoffatome der Formel (I) über Alkylengruppen mit 1 bis 16 C-Atomen gebunden sind.

Zur Herstellung der harnstoffgruppenhaltigen Diamine werden als Diaminoalkane vorwiegend endständige Diamine mit zwei primären, zwei sekundären oder je einer primären und sekundären Aminogruppe eingesetzt, die eine lineare oder verzweigte, aliphatische oder cycloaliphatische Kohlenstoffkette von 2 bis 16 Kohlenstoffatomen enthalten, wie Hexandiamin-1,6, Trimethylhexamethylendiamin oder Isophorondiamin (3-Aminomethyl-3,5,5 -trimethylcyclohexylamin), N-Methyl-1,3-propandiamin, N,N'-Diethyl-1,4-butandiamin oder N,N'-Dimethyl-4,4'-diaminodicyclohexylmethan. Die Kondensation erfolgt üblicherweise in der Schmelze oder unter aceotropem Auskreisen des abgespaltenen Wassers bei Temperaturen von etwa 130 bis 240°C. Es wird solange verestert, bis die Säurezahl des Produktes unter 1 liegt. Als Aminocarbonsäuren können verwendet werden Glycin, Alanin, Phenylamin, Sarkosin der Pyrrolidincarbonsäure.

Das harnstoffgruppenhaltige Diamin wird durch Addition von Diaminoalkanen, wie sie im vorigen Abschnitt beschrieben wurden, an Polyisocyanate mit mindestens zwei Isocyanatgruppen hergestellt. So können zwei Mol primäres oder sekundäres Diamin oder ein Mol primäres oders sekundäres Monoamin und ein Mol primäres Diamin mit einen Mol Diisocyanat umgesetzt werden. Typsiche Isocyanate sind die Isomeren oder Isomerengemische des Toluylendiisocyanats, 4,4'-Diphenylmethan-diisocyanats, sowie ihrer Hydrierungsprodukte wie Dicyclohexylmethandiioscyanat. Außerdem finden Verwendung Hexan-1,6-diisocyanat, 1,6-Diisocyanato-2,2,4-trimethylhexan oder Isophorondiisocyanat. Auch gemischt aliphatischaromatische Verbindungen sind geeignet. Die Herstellung der harnstoffhaltigen Diamins erfolgt in Lösemitteln, die nicht mit der isocyanatgruppe reagieren, wie Ethylendiglykol-dimethylether, bei etwa 20 bis 40°C durch langsamen Zusatz des Polyisocyanats in das überschüssige, gegebenenfalls defunktionalisierte Diamin. Bevorzugt wird das Addukt aus Toluylendiisocyanat und einen Reaktionsprodukt von ein Mol Cardura E (eingetragenes Warenzeichen) an ein Mol Hexandiamin-1,6. Zur vollständigen Umsetzung wird die Reaktion im allegemeinen durch Steigern der Temperatur auf 50 bis 125°C vollendet. Setzt man Diaminoalkane mit einer sekundären une einer primären Aminogruppen ein, so kann es angebracht sein, die Reaktivität der primären Aminogruppe durch Ketiminbildung oder die Reaktivität der Isocyanatgruppe durch geeignete Schutzgruppen zu senken.

Beim Einsatz von Polyisocyanaten, die mehr als zwei Isocyanatgruppen enthalten, wird, um Gelierungen zu vermeiden, die Zahl der Isocyanatgruppen durch ein Monoamin oder einen Monoalkohol auf zwei verringert und dann die übliche Reaktion mit Diaminen durchgeführt..Als Triisocyanate haben sich Produkte bewährt, die durch Trimerisierung, Umsetzung mit Wasser oder anteilweiser Reaktion mit trifunktionellen Polyolen entstehen. Beispiele hierfür sind das Isocyanurat des Hexamethylendiisocyanats, das Biuret aus Hexamethylendiioscyanat und Wasser oder das Addukt von drei Molen Toluylendiisocyanat an ein Mol Trimethylolpropan.

Die molekülvergrößernden Diamine der Formel (I) sind also in einer Menge von mindestens 8 Gew.%, berechnet als Verbindung der Formel I und bezogen auf das Gesamtgewicht der Komponente (A) in der Komponente (A) eingebaut enthalten. Bevorzugt beträgt die Menge mindestens 15 Gew.%, und besonders bevorzugt mindestens 20 Gew.%. Die obere Grenze ist nicht besonders kritisch und hängt im wesentlichen ab von dem Gesamtaufbau des Moleküls, d.h. der Notwendigkeit des Vorhandenseins der anderen erwähnten Bestandteile Berücksichtigung der gennanten mittleren Molmasse von 500 bis 20 000. Im allgemeinen beträgt die Obergrenze etwa 50 Gew.%, vorzugsweise etwa 40 Gew.%.

Beim Einbau der Verbindungen der Formel (I) in die Moleküle der Komponente (A) erfolgt in der Regel eine Addition der Aminogruppen der Formel (I) an die Epoxygruppen mit Molekülvergrößerung.

Es ist gemäß der Erfindung bevorzugt, daß die insgesamt in den Molekülen der Komponente (A) vorliegenden Harnstoffgruppen im Rahmen der Formel (I) vorliegen.

Um lineare Basisharzmoleküle zu erhalten, bzw. frühzeitiges Gelieren zu verhindern, erfolgt die Umsetzung des harnstoffgruppenhalitgen Polyamins mit den epoxidgruppenhalitgen Harzen bevorzugt so, daß bei sekundären Diaminen das Amin, bzw. Amingemisch in die Epoxidharzlösung, bei primären oder sekundären und primären Diaminen die Epoxidharzlösung in das vorgelegte Amingemisch langsam zugegeben werden bei Reaktionstemperaturen von etwa 30 bis 100°C. Die stöchiometrischen Verhältnisse werden dabei bevorzugt so ausgelegt, daß auf eine Epoxidgruppe ein reaktives Stickstoffatom kommt. Durch Umsetzung mit Monoepoxiden wie Ethlenoxid, Propylenoxid, Glycidol, Glycidylester wie Cardura E (eingetragenes Warenzeichen) oder Glycidylethern wie Glycidylallylether können bei Temperaturen von etwa 70 bis 150°C gegebenenfalls unter Druck primäre in sekundäre Aminogruppen umgewandelt werden. All amid- oder harnstoffgruppenhaltige Polyamine werden solche bevrozugt, deren Wasserstoffatome an der Amid- oder Harnstoffgruppe nicht substituiert sind.

Zur Einführung von ungesättigten Gruppen in das Basisharz (A) kann am Ende der Herstellungsreaktionen eine Umetherung mit einem methylolgruppenhaltigem (Meth)acrylamid erfolgen, dessen Methylolgruppe mit C1 bis C8-Mono-alkoholen verethert sein kann. So können z.B. die Hydroxylgruppen des Basisharzes (A) mit Methylolacrylamid-monobutylether umgesetzt werden durch mehrstündiges Erhitzen auf 80 bis 160°C, gegebenenfalls unter Anlegen von Vakuum.

Die stöchiometische Berechnung und die Auswahl der einzelnen Rohstoffe erfolgt so, daß das Basisharz (A) im Druchschnitt mindestens eine Aminogruppe pro Molekül enthält. Die Menge des Amis für die Umsetzung mit den epoxidgruppenhaltigem Harz wird so ausgewählt, daß sie mindestens ausreichend ist, um das Harz nach Neutralisation mit einer Säure einen kationischen Charakter zu verleihen. In manchen Fällen werden im wesentlichen alle Epoxidgruppen mit Amin umgesetzt. Die untere Grenze der Aminzahl (ausgedrückt im mg KOH pro Gramm Festharz) beträgt 35; sie liegt zweckmäßig über 50, besonders über 65. Die obere Grenze beträgt 150; sie liegt bevorzugt unter 100, besonders bevorzugt unter 85. Ist die Aminzahl zu niedrig, so ist die Löslichkeit zu gering, der Lack setzt beim Stehen ab. Durch den zu hohen Neutralisationsgrad werden in den Bädern zu saure pH-Werte erhalten. Ist die Aminzahl zu hoch, so entsteht ein schlecht häftender Überzug. Durch zu starke elektrlytische Gasentwickung beobachtet man oft eine unregelmaßig dicke, blasige Oberfläche.

Die im Molekül vorhandene Hydroxylzahl (ausgedrückt in mg KOH pro Gramm Festharz) ist maßgebend für die Vernetzungsfähigkeit des Films. Sie sollte über 50, vorteilhaft über 100, besonders vorteilhaft über 150 liegen. Die obere Grenze der Hydroxylzahl liegt bei 400, vorteilhafter unter 300. Ist die Hydroxylzahl zu niedrig, so entstehen bei der Umesterung Filme, die noch in organischen Lösemitteln wie Methylethylketon löslich sind. Ist die Hydroxylzahl dagegen zu hoch, so wird der Film zu spröde und bleibt eventuell auch zu hydrophil. Im Molekül müssen mindestens zwei vernetzungsfähige, bevorzugt primäre Hydroxylgruppen vorliegen.

Das tertiäre und gegebenenfalls auch sekundäre und primäre Aminogruppenaufweisende Basisharz (A) hat eine mittlere Molmasse ($\overline{Mn}$) von etwa 500 bis 20 000, speziell 1000 bis 5000 und einem $pK_b$-Wert von etwa 3 bis 7. Der $pK_b$-Wert ist der negative dekadische Logarithmus der basischen Dissoziationskonstante.

Das Vernetzungsmittel (B) ist ein Harz mit endständigen oder seitenständigen, veresterten Carboxylgruppen, die im neutralen, wäßrigen Medium weitgehend stabil sind, jedoch im basischen Medium des abgeschiedenen Films bei Temperaturen über etwa 140°C mit einem oder mehreren hydroxylgruppenhaltigen Aminoepoxidharzen (Basisharz A) reagieren. Es sollen im wesentlichen alle endständigen oder seitenständigen Carboxylgruppen mit Alkoholen verestert sein, die unter den Einbrennbedingungen flüchtig sind. Um ein Wandern des Vernetzungsmittels (B) zur Anode zu vermeiden, ist darauf zu achten, daß die Komponente (B) eine Säurezahl unter 20, bevorzugt unter 10, besonders bevorzugt unter 4 enthält. Das Vernetzungsmittel hat eine mittlere Molmasse ($\overline{Mn}$) von etwa 350 bis 5000, speziell 500 bis 3000. Die Reaktivität der Ester wird durch die Verwendung primärer Alkhole wie Methanol oder Ethanol und durch die Erhöhung der elektrophilen Aktivät der Carboxylgruppe durch geeignete Substituenten gesteigert. Je niedriger molekular Alkohole sind, die bei der Umesterung abgespalten werden, desto niedriger sind die Abspaltverluste. Es können die in der Literatur beschriebenen Vernetzungsmittel dieser Art verwendet werden, z.B. Monoalkohole mit 1 bis 8 C-Atomen.

In der Literatur werden eine Reihe von Vernetzungsmitteln beschrieben, die zur Umesterung mit OH-Gruppen und/oder Umamidierung mit $NH_2$-Gruppen befähigt sind z.B.

In der EP—A—0 040 090 werden Polyurethane beschrieben, die als umesterungsfähige Gruppen Hydroxylalkylester wie Milchsäureester oder Aminoalkylester wie Sarkosinester enthalten. Das Vernetzungsmittel weist etwa folgende allgemeine Struktur auf

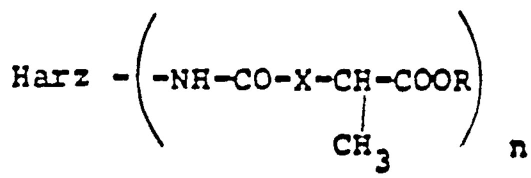

wobei n mindestens zwei, bevorzugt ein Wert zwischen 3 und 10 ist, X entweder —O— oder NH— bedeutet und R einen geradkettigen oder verzweigten, gesättigten oder ungesättigten Alkylrest mit 1 bis 8-C-Atomen darstellt, bevorzugt Methanol oder Ethanol. Wenn das Vernetzungsmittel ein Reaktionsprodukt eines Isocyanats mit einer eine Carbonsäureestergruppe enthaltenden Vebindung ist, ist es vorzugsweise ein Additionsprodukt von Hydroxycarbonsäurealkylestern an Harze mit Isocyanatgruppen.

Solche Vernetzungsmittel sind z.B. carboxylgruppenhaltige Polyester, deren Carboxylgruppen durch gegebenenfalls substituierte 1,2-Glykole unter Bildung von β-Hydroxyverbindungen blockiert sind:

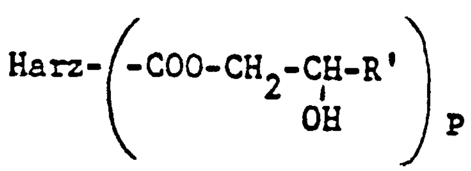

Die eingesetzten 1,2-Glykole sind zweckmäßig durch gesättigte oder ungesättigte Alkyl-, Ether-, Ester- oder Amidgruppen substituiert, d.h. R′ steht für —R, —H, $—CH_2—OR$,

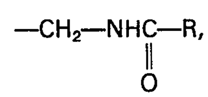

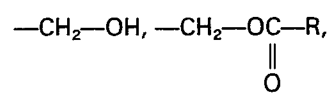

und P ist ein Wert von 2 bis 8. R ist eine Alkylgruppe mit 1 bis 8 C-Atomen. Vernetzungsmittel dieser Art sind in der EP—A—012 463 und DE—A—31 03 642 beschrieben, z.B. als Reaktionsprodukt von Trimellithsäureanhydrid mit Cardura E R, dem Glycidylester der Versaticsäure.

Ein weiteres Vernetzungsmittel wird durch Umesterung von Dicarbonsäurealkylestern mit Polyalkoholen hergestellt. Besonders reaktiv sind Harze folgender Formel

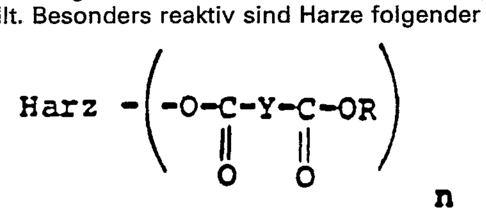

wobei n mindestens zwei, bevorzugt 3 bis 10 ist, Y eine $—CH_2—$, $—CH_2CH_2—$ oder —CH=CH-Gruppe und R einen geradkettigen oder verzweigten Alkylrest mit 1 bis 8 C-Atomen darstellen, bevorzugt Methanol

oder Ethanol. Im einfachsten Fall ist dieses Vernetzungsmittel ein Reaktionsprodukt aus Trimethylolpropan und Malonsäurediäthylester, wie es in der EP—A—082 291 beschrieben ist.

Ein weiteres zur Umesterung befähigtes Vernetzungsmittel kann durch Michael-Addition von Acetessigsäurealkylester oder Malonsäure-dialkylester an Harze mit über C=O-Gruppen aktivierte ungesättigte Doppelverbindungen erhalten werden:

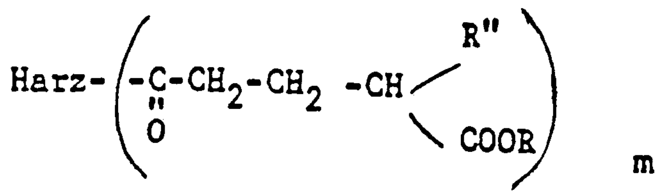

wobei R'' für —COOR oder —CO—R steht und m ein Wert von 2 bis 8 ist. Diese Harze werden im enfachsten Fall aus Butandiol-diacrylat und Acetessigester hergestellt. Bevorzugt sind das Urethan aus Toluylendiisocyanat und Hydroxylalkyl(meth)acrylat, das, wie in der DE—A—33 15 469 beschrieben, mit Malonsäurediethylester umgesetzt wird.

Das Mischungsverhältnis der Komponenten (A) und (B) kann im Überzugsmittel in weiten Grenzen schwanken. Es liegt bevorzugt zwischen 80 zu 20 und 60 zu 40 und wird empirisch aus den optimal erreichbaren anwendungstechnischen Eigenschaften bei der gegebenen Einbrenntemperatur bestimmt. Eine Kombination mehrerer Vernetzungssysteme kann in bestimmten Fällen von Vorteil sein. Schon wenige Prozent, z.B. 0.5 bis 5.0 Gew.%, er an zweiter Stelle beschriebenen Vernetzungskomponente kann die Kraterанfälligkeit des dritten Vernetzungsmittels entscheidend verringern. Die Komponenten können kalt gemischt oder auch bei erhöhter Temperatur präkondensiert werden. Dabei reagieren die Komponenten (A) und (B) in gewissen Umfang miteinander, ohne daß das Gemisch seine Hitzehärtbarkeit und die Eigenschaft durch Protonisieren mit Säuren wasserlöslich gemacht werden zu können, verliert.

Als übliche Umesterungskatalysatoren (Komponente C) werden zweckmäßig 0.1 bis 10 Gew.%, bevorzugt 2 bis 6 Gew.% (bezogen auf die Komponenten (A) und (B)) Metalloxide, Metallsalze oder Metallkomplexe von ein- oder mehrwertigen Metallen verwendet. Sie werden im allgemeinen nach Salzbildung mit 2-Ethylhexansäure oder Naphthensäure in aliphatischen und aromatischen Kohlenwasserstoffen gelöst. Diese Lösungen werden in das Elktrophoresebad einemulgiert. Eine andere Möglichkeit besteht in der Komplexbildung der Metalle mit Acetylacetonat, Dicyclopentadien oder 8-Oxy-hydrochinolin. Beispiele für geeignete Katalysatoren sind Antimontroxid, Cobaltnaphthenat, Bleioctoat, Eisen-acetylacetonat, das Reaktionsprodukt auz Zinkoxid und 8-Oxyhydrochinolin, Thallium-dicyclopentadien oder Triethanolamintitanat. Bevorzugt werden Bleioctoat und das Zink-Oxyhydrochinolat. Die Metallkatalysatoren können auch in fein verteilter Form als Pigmente wie Bleisilikat eindispergiert werden. Wasserlösliche Metallsalze sind ebenfalls als Umesterungskatalysatoren geeignet, wenn das Metall als Verbindung oder Komplex in fein verteilter Form mit den Lack abgeschieden wird. Bevorzugt sind Katalysatoren, die im ET-Bad schlecht löslich sind und sich nach der elketrophoretischen Abscheidung im abgeschiedenen Film beim Einbrennen gleichmäßig verteilen.

Durch Protonisieren mit Säuren wird das kationische Basisharz in an sich bekannter Weise wasserverdünnbar gemacht. Beispiele für Säuren sind Ameisensäure, Essigsäure, Propionsäure, Milchsäure, Zitronensäure, Malonsäure, Acrylsäure, Aminoessigsäure, Phosphorsäure oder Alkylphosphorsäure. Es muß mindestens so viel Säure zugegeben werden, daß eine Lösung des kationischen Basisharzes erfolgt. Ein Überschuß an Säure, d.h. ein Neutralisationsgrad über 100%, ist zweckmäßig zu vermeiden. Der MEQ-Wert (Milliäquivalente Säure pro 100 g Festharz) liegt im allgemeinen zwischen 20 und 80.

Das Überzugsmittel kann zusätzlich übliche lacktechnische Zusatzstoffe wie Antikratermittel, Verlaufmittel, Antischaummittel usw. enthalten. Naturgemäß sind solche Zusatzstoffe auszuwählen, die mit Wasser bei saurem bis neutralen pH-Wert keine störenden Reaktionen eingehen, keine störenden Fremdionen einschleppen und bei längerem Stehen nicht in nichtaufrührbarer Form ausfallen, d.h. auch nach längerem Stehen muß sich das Überzugsmittel durch Rühren in eine brauchbare Dispersion überführen lassen.

Das Überzugsmittel kann zum Senken der Viskosität, zum Steuren der Abscheidespannung und zum Verbessern der Haftung und des Verlaufs bis zu ungefähr 20 Gew.% organische Lösemittel enthalten. Es wird ein möglichst niedriger Gehalt an organischen Lösemitteln angestrebt, besonders unter 15 Gew.%, ganz besonders unter 10 Gew.%. Als Losémittel dienen Alkohole, Glykolether, Ketoalkohole, gegebenenfalls unter Zusatz von aliphatischen und aromatischen Kohlenwasserstoffen verschiedener Kettenlänge. Bei der Auswahl muß berücksichtigt werden, daß die Komponente (B) nicht wasserlöslich ist und Anteile von wasserunlöslichen Lösemitteln gegebenenfalls den Dispergiervorgang erleichtern und stabilisieren können. Mit steigendem Lösemittelgehalt verschlechtert sich der Umgriff, und es können Überbeschichtungen auftreten; mit sinkendem Lösemittelgehalt verringert sich die abgeschiedene Schichtdicke, Wasserunlösliche Lösemittel wirken heirbei stärker als wasserlösliche. Die für die Herstellung

der Komponente (A) notwendigen aprotischen Lösemittel können gegebenenfalls nach der Herstellung des Produktes gegen andere Lösemittel durch Abdestillieren ausgetauscht werden.

Der Feststoffgehalt des Überzugsmittels gemäß der Erfindung beträgt nach Verdünnen mit Wasser zweckmäßig 5 bis 50 Gew.%. Beim Einstellen des Lackes auf einem höheren Festkörper von 25 bis 50 Gew.%, bevorzugt 30 bis 45 Gew.% werden wasserverdünnbare Einbrennlacke erhalten, die durch Tauchen, Spritzen, Walzen usw. auf das zu lackierende Objekt aufgebracht werden können. Verdünnt man auf einen Festkörper von 5 bis 30 Gew.%, vorzugsweise 10 bis 20 Gew.%, so ist der Lack für die elektrophoretische Abscheidung geeignet. Das Bad wird ständig gerührt, um an der Kathodenoberfläche eine gleichmäßige Tempeatur aufrechtzuerhalten und ein Absetzen der unlöslichen Bestandteile der Dispersion, z.B. der Pigmente, zu verhindern. Durch Protonisieren werden die Bindemittel "wasserlöslich" gemacht, wie dies auf diesem technischen Gebiet bekannt ist. Darunter wird verstanden, daß es in sehr fein verteilter Form dispergiert ist und keine Fällungen auftreten. In der Literatur wird die oft als "wasserverdünnbar" bezeichnet. Der pH-Wert des Lackes liegt im allgemeinen zwischen 5.0 und 7.0, vorzugsweise zwischen 5.5 und 6.5. Liegt der pH-wert zu niedrig, so ist mit einem Angriff der Säure auf das Eisen von Becken und Rohrleitungen zu rechnen.

Die elektrophoretische Abscheidung erfolgt zweckmäßig frühestens 24 Stundent nach Herstellen des Bades. Während dieser Zeit wird zweckmäßig kontinuierlich geruhrt, um eine gleichmäßige Verteilung zu erhalten. Als Anode werden elektrisch leitfähige, nicht korrodierende Elektroden, z.B. aus nichtrostendem Stahl oder Graphit verwendet. Der an der Kathode zu beschichtende Gegenstand und die Anode werden, wie für die elektrophoretische Abscheidung bekannt, in ein wäßriges Bad eingetaucht. Es können alle metallisch leitenden Werkstücke beschichtet werden, z.B. Kupfer, Aluminium, Zinn, Zink, Eisen und Legierungen dieser Metalle. Während der Absc-heidung wird das Bad bei Temperaturen von zweckmäßig etwa 15 bis 35°C gehalten. Festkörper Abscheidetemperatur und -zeit, sowie Spannung werden so gewählt, daß die gewünschte Schichtstärke nach Abspülen mit Wasser und Einbrennen bei Objekttemperaturen von etwa 160 bis 200°C erhalten wird. So steigt z.B. die Schichtstärke mit zunehmender Beschichtungszeit und Abscheidespannung. Beim Anlegen eines elektrischen Stroms mit einer Spannung von zweckmässig 50 bis 500 Volt zwischen metallisch leitendem Werktück une einer Gegenelektrode wird das wasserverdünnbare Basisharz an der Kathode koaguliert. Es transportiert hierbei das wasserunlösliche Vernetzungsmittel, Pigmente, Katalysatoren usw. mit. Hierbei kann sich das Verhältnis von Pigment zum Kunstharz Bindemittel im abgeschiedenen Film zugunsten des Pigmentes verschieben. Gleichzeitig werden Wasser und die zur Neutralisation verwendete Säure im Bad angereichert. Zum Nachfüllen müssen daher konzentriertere Lacke verwendet werden, die diese Verschiebungen durch Änderung der Mengenverhältnisse ausgleichen. Diese Korrektur kann auch durch geeignete apparative Einrichtungen, z.B. Elektrodialyseverfahren, erfolgen.

Das konzentrierte, mit Wasser zu verdünnende Bindemittel gemäß der Erfindung kann mit z.B. einem Festkörper von 85 bis 50 Gew.% in üblicher Weise mit Kugelmühle, Dreiwalze doer Sandmühle pigmentiert werden. Hierzu können übliche Pigmente, Füllstoffe, Korrosionsschutz-Inhibitoren und Lackhilfsmittel verwendet werden, solange sie mit Wasser in sauren bis neutralen Medium keine störenden Reaktionen eingehen, keine wasserlöslichen Fremdionen einschleppen und beim Altern nicht so ausfallen, das sie nicht wieder aufgerührt werden können. Die Lacke sind besonders für die Elektrotauchlackierung von Metallen geeignet und geben nach Einbrennen von 30 Minuten bei 180°C glatte, glänzende, harte Filme mit guter Haftfestigkeit, Elastizität und Korrosionsbeständigkeit. Das Pigment-Bindemittel-Verhältnis ist abhängig von der Dispergierbarkeit und Viskosität des Bindemittels und liegt im allgemeinen zwischen 0.1:1 und 1.5:1.

Vorprodukt 1 (Harnstoffgruppen enthaltendes Diamin)

190 g Hexandiamin-1,6 werden unter Inertgas auf 110°C aufgewärmt und 833 g Cardura E (eingetragenes Warenzeichen) innerhalb von drei Stunden zugegeben. Durch Kühlen wird die exotherme Reaktion bei 100 bis 110°C gehalten. Es wird vier Stunden gerührt, dann auf 40 bis 50°C abgekühlt und 168 g Trimethylhexamethylendiisocyanat langsam zwei Stunden zugetropft. Anschließend wird eine Stunde bei 60°C und eine weitere Stunde bei 80°C gehalten. Es konnte kein freies NCO mehr nachgewiesen werden und wurde dann mit Ethylenglykol-monoethylether auf 90 Gew.% verdünnt.

Vorprodukt II (Amidgruppen enthaltendes Diamin) Vergleich

178.5 g Hexandiamin-1,6 und 341.3 g einer dimeren Fettsäure, die sich aus Spuren von Monomeren, ca. 80% Dimeren und 20% Trimeren zusammensetzt, werden kontinuierlich von etwa 155°C bis 220°C aufgeheizt, wobei ständig Wasser abgespalten wird. Die Kondensation ist beendet, wenn die Säurezahl bei 0.5 mg KOH/g Festharz liegt. Nach Abkühlen auf 105°C werden 390 g Cardura E (eingetragenes Warenzeichen) in etwa zwei Stunden langsam zugegeben und die Reaktionsmischung bei dieser Temperatur drei Stunden gehalten.

Aminzahl: 83 mg KOH/g Festharz.

Vorprodukt III (Harnstoffgruppen enthaltendes Diamin)

In 295 g Hexandiamin-1,6 werden bei 100°C 644 g Cardura E (eingetragenes Warenzeichen) zugetropft und nach Verdünnen mit 800 g wasserfreien Methylisobutylketon auf 25°C abgekühlt. Innerhalb von sechs

Stunden wurden bei 25 bis 30°C unter starkem Kühlen sehr langsam 260 g Toluylendiisocyanat-Isomerengemisch zugetropft. Nach zwei weiteren Stunden wurde auf 50 bis 60°C zur Vollendung der Reaktion erwärmt und das Lösemittel unter Vakuum abdestilliert.

Festkörpergehalt: 91.8 Gew.% (1 Stunde 150°C).

Basisharz A1

438.6 g eines Epoxidharzes auf Basis Bisphenol A mit einem Epoxidäquivalentgewicht von 465 wird bei 55°C in 248 g Ethylenglykol-monoethylester gelöst. Anschließend werden in etwa 15 Minuten 31.8 Diethanolamin zugetropft, wobei die Temperatur auf etwa 60°C ansteigt. Eine Stunde später wird in 5 Minuten ein Gemisch von 265.8 g Vorprodukt I und 15.4 g Dimethylaminopropylamin zugegeben. Nach einer Stunde wird eine Stunde bei 85 bis 90°C und eine weitere Stunde bei 120°C gehalten.

Endwerte: Festkörpergehalt: 67.6 Gew.% (nach 40 Minuten Erwärmen auf 180°C)

Viskosität: 2.2 Pas (nach Verdünnen auf 50 Gew.% mit Ethylenglykolmonoethylether)

Aminzahl: 81 mg KOH/g Festharz.

Basisharz A2 (Vergleich)

2172 g eines Epoxidharzes auf Basis Bisphenol A mit einem Epoxidäquivalentgewicht von 480 wird bei etwa 50°C in 1160 g Ethylenglykol-monoethylether gelöst. Anschließend werden in etwa 15 Minuten 191.6 g Diethanolamin zugetropft, wobei die Temperatur trotz Kühlens auf 62°C anstiegt. Nach etwa eineinhalb Stunden wird in etwa 20 Minuten nacheinander erst 417.2 g Vorprodukt II und dann ein Gemisch von 21.6 g Ethylenglykol-monoethylether und 43.2 g N,N-Diethyl-1,2-ethandiamin zugebeben. Nach einer Stunde wird auf etwa 80°C geheizt, eine Stunde gehalten und dann die Temperatur auf 120°C erhöht. Nach einer Stunde ist die Reaktion beendet und das Reaktionsgemisch kann abgekühlt und filtriert werden.

Endwerte: Festkörpergehalt: 72.4 Gew.%

Viskosität: 6.7 Pas (50/50 in Ethylenglykol-monoethylether)

Aminzahl: 62 mg KOH/g Festharz.

Basisharz A3

2172 g eines Epoxidharzes wie in Basisharz A2 wird bei etwa 50°C in 1160 g Ethylenglykol-monoethylether gelöst. Anschließend werden in etwa 15 Minuten 191.6 g Diethanolamin zugetropft, wobei die ansteigende Temperatur durch Kühlen auf maximal 54°C gehalten wurde. Nach etwa eineinhalb Stunden wird ein Gemisch aus 404 g Vorprodukt III, 26.4 g Ethylenglykol-monoethylether und 46.4 g Dimethylaminopropylamin zugegeben; und wie Versuch A2 weiterverarbeitet.

Endwerte: Festkörpergehalt: 71.7 Gew.%

Viskosität: 1.8 Pas (50/50 in Ethylenglykol-monoethylether)

Aminzahl: 70 mg KOH/g Festharz.

Vernetzungsmittel B1

1248 g Cardura E (eingetragenes Warenzeichen) werden auf 100°C unter Inertgas erwärmt und dann unter gutem Rührem in mehreren Portionen 460.8 g Trimellithsäureanhydrid zugegeben. Unter Ausnutzen der exothermen Reaktion wird bis auf 195°C geheizt. Wenn das Harz klar ist, wird auf 145°C abgekühlt und 1.8 ml Benzyldimethylamin als Katalysator zugegeben. Nach Erreichen einer Säurezahl von 2 mg KOH/g Festharz wird auf 100°C abgekühlt und mit 712 g Ethylenglylkol-monobutylether verdünnt.

Endwerte: Festkörpergehalt: 67.5 Gew.% (nach 40 Minuten Erwärmen auf 180°C)

Viskosität: 0.9 Pas (nach Verdünnen auf 50 Gew.% mit Ethylenglykol-monobutylether)

Säurezahl: 2.3 mg KOH/g Festharz.

Vernetzungsmittel B2

Ein Gemisch aus 108 g Hydroxyethylacrylat, 81.8 g eines Gemisches von 2.4- und 2.6-Toluylendiisocyanat, 3 Tropfen Triethylamin und 21 g Diethylenglykoldimethylether wird fünf Stunden auf 60°C erhitzt. Darauf werden 1 g Kalilauge (30%ig in Methanol) und 128 g Malonsäurediethylester zugegeben und das Gemisch in zweiter Stufe sechs Stunden auf 120°C erhitzt. Der Anteil der Doppelbindungen beträgt dann weniger als 0.2% Das Reaktionsgemisch wird darauf mit Ethylenglykol-monoethylether bis zu einem Festkörpgergehalt von 90 Gew.% verdünnt. Man erhält eine mittel bis stark gelb gefärbte, hochviskose, klare Flüssigkeit.

Beispiel 1

236 g Basisharz A1 werden mit 59.2 g Vernetzungsmittel B1 und 1.3 g Eisen-III-acetylacetonat gemischt, danach mit 6 g Essigsäure anneutralisiert und langsam auf 2 Liter mit entionisiertem Wasser verdünnt.

Badwerte: siehe Tabelle 1

Aus dem KTL-Bad werden auf Zink-phosphatierten Stahlblechen Lackfilme an der Kathode abgeschieden, mit Wasser gespült und bei erhöhter Temperatur (20 Minuten 180°G Objekt) gehärtet.

Beispiel 2 (Vergleich)

331.5 g Basisharz A2 werden mit 62.3 g Vernetzungsmittel B2,44 g Vernetzungsmittel B1 und 5.8 g Bleioctoat (72 %-ig) gemischt, danach mit 13.5 g Milchsäure anneutralisiert und langsam auf 2 Liter mit entionisiertem Wasser verdünnt.

Badwerte: siehe Tabelle 1

Aus dem KTL-Bad werden auf Zink-phosphatierten Stahlblechen Lackfilme an der Kathode abgeschieden, mit Wasser gespült und bei erhöhter Temperatur (15 Minuten 175°G Objekt) gehärtet.

Beispiel 3

223 g Basisharz A3 werden mit 59 g Vernetzungsmittel B1, 6 g Bleioctoat (72%-ig) gemischt, danach mit 4.1 g Ameinsensäure anneutralisiert und langsam auf 2 Liter mit entionisiertem Wasser verdünnt.

Badwerte: siehe Tabelle 1

Abscheidung wie Beispiel 2.

Vergleichsbasisharz (nach EP—A—0 012 463 Beispiel Ib)

Zu einer Lösung von 283,2 g Polyglycidylether auf Basis Bisphenol A mit einem Epoxy-Äquivalentgewicht von 472 (Epikote 1001®) in 161 g Ethylenglykol-monobutylether werden 21 g Diethanolamin, 10.2 g 3-(N,N, Diethylamino)propylamin und 61.6 g eines Adduktes von 1.6-Diamino-hexan und Cardura E 10®, einem Glycidylester der Versaticsäure®, zugegeben. Dieses Addukt wird hergestellt durch Umsetzung von 116 g 1.6-Diaminohexan mit 500 g Cardura E 10 bei 80°C für drei Stunden. Die Mischung von Polyether und dem Aminen reagiert nach Erwärmen unter Rühren für 4 Stunden auf 85 bis 90°C. Zum Vervollständigen der Reaktion wird dann noch 1 Stunde auf 120°G geheizt. Der Epoxidgehalt ist dann Null. Aminzahl: 89 mg KOH/g Festharz, Festkörpergehalt: 70 Gew.%.

Vergleichsbeispiel

219 g Vergleichs-Basisharz werden mit 59 g Vernetzungsmittel B1 und 6 g Bleioctoat (72%-ig) gemischt, danach mit 4.1 g Ameisensäure anneutralisiert und langsam auf 2 Liter mit entionisiertem Wasser verdünnt.

TABELLE 1

| | Vergleich | Beispiel 1 | Beispiel 2* | Beispiel 3 |
|---|---|---|---|---|
| Festkörper | 10 Gew.% | 10 Gew.% | 15 Gew.% | 10 Gew.% |
| spez. Leitfähigkeit | 1630 $\mu Scm^{-1}$ | 1324 | 864 | 1230 |
| $MEQ_2$-Wert | 45 | 50 | 40 | 45 |
| pH-Wert | 5.6 | 5.9 | 5.7 | 5.7 |
| Abscheidespannung | 2 Min 240 V | 2 Min 190 V | 2 Min 160 V | 2 Min 210 V |
| Schichtdicke | 15—16 µm | 20 µm | 23 µm | 21 µm |
| Erichsen-Tiefun | 6.1 mm | 8.7 mm | 9.3 mm | 8.3 mm |
| König-Pendelhärte | 195'' | 192'' | 165'' | 202'' |
| Oberfläche | glatt, ohne Verlaufsstörungen | glatt, glänzend | glatt, glänzend | glatt, ohne Verlaufsstörungen |

* Vergleich, amidgruppenhaltiges Diamin als Vorprodukt II.

Für Steinschlagtest und Prüfung auf PVC-Haftung wurde mit den einzelnen Bindemitteln eine graue Pigmentierung aus Titanadioxid (Rutil) und etwas Ruß im Pigment-Bindemittel-Verhältnis 0.5 zu 1 hergestellt. Der Lack wurde mit Bleisilikat und Bleioctoat in einer Menge von 2.5 Gew.%, gerechnet als Blei und bezogen auf Bindemittel-Festkörper katalysiert.

Der Steinschlagtest erfolgte nach DIN 55 995 mit einem abgestimmten Lackaufbau, wie er bei Sereinmaterialien für verschiedene Autofirmen eingesetzt wird. Geprüft wurde Monosteinschlag und Multisteinschlag, und dabei wurden die Abplatzungen zwischen Füller und ET-Grundierung, sowie zwischen ET-Grundierung und phosphatiertem Blech beurteilt. Im Verhältnis zum Vergleichsmaterial tritt in den Beispielen 1 bis 3 ungefähr eine Halbierung der Enthaftung auf.

Bei der PVC-Haftung wird auf die eingebrannte ET-Grundierung ein darauf abgestimmten PVC-Organosol in dicker Schicht aufgespritzt und durch Wärmeeinwirkung geliert. Es wird nach Belastung in den gängigen Korrosionsschutztesten geprüft, ob sich die PVC-Schicht vom Untergrund abziehen läßt oder nicht, bzw. mit welchem Kraftaufwand ein Abziehen möglich wird. Mit verschiedenen PVC-Handelsprodukten wurden in den Beispielen 1 bis 3 Verbesserungen gebenüber dem Vergleichsversuch festgestellt.

**Patentansprüche**

1. Kathodisch abscheidbares wäßriges Elektrotauchlack-Überzugsmittel, das Pigmente, Füllstoffe, Korrosionschutzinhibitoren, Lackhilfsmittel, gegebenenfalls Katalysatoren und in eine Menge bis zu 20 Gew.%, bezogen aus das Gesamtgewicht des Überzugsmittels, organische Lösungsmittel und als Kunstharz-Bindemittel enthält.

(A) 55 bis 95 Gew.%, bezogen auf die Gesamtmenge des Kunstharz-Bindemittels, eines Hydroxyl- und tertiäre Aminogruppen sowie gegebenenfalls primäre und/oder sekundäre Aminogruppen enthaltenden Kunstharz-Bindemittels mit einer mittleren Molmasse ($\overline{M}n$) von 500 bis 20 000, das einen $pK_b$-Wert von 3 bis 7 und eine Hydroxylzahl von 50 bis 400 und eine Aminzahl von 30 bis 150 aufweist, und welches durch Protonisieren mit Säure wasserlöslich gemacht werden kann, und

(B) 5 bis 45 Gew.% eines umesterungs- und/oder umamidierungsfähige Estergruppen enthaltenden Vernetzungsmittel mit einer Molmasse ($\overline{M}n$) von 350 bis 5000, das eine Esterzahl von reaktiven endständigen Estergruppen von 30 bis 500, bevorzugt von 100 bis 250, aufweist, wobei die Estergruppen in neutralem wäßrigen Medium weitgehend stabil sind, jedoch im basischem Medium bei Temperaturen über 140°C gegenüber Hydroxyl-, primären und/oder sekundären Aminogruppen des Kunstharz-Bindemittels A reaktionsfähig sind,

dadurch gekennzeichnet, daß die Komponente (A) in einer Menge von mindestens 8 Gew.%, berechnet als Verbindungen der Formel I und bezogen auf das Gesamtgewicht der Komponente (A), mindestens ein molekülvergrößerndes Diamin der Formel

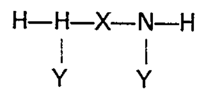

(I)

eingebaut enthält, worin das Symbol Y für $C_mH_{2m+1}$ (m = 1 bis 8) oder einen zum Defunktionalisieren verwendeten organischen Rest, der durch Umsetzung der primären Aminogruppe mit Monoepoxiden gebildet wird, steht und das Symbol X eine Molekülgruppierung mit mindestens einer Harnstoffgruppe darstellt, wobei diese Gruppen an die Stickstoffatome der Formel (I) über Alkylengruppen mit 1 bis 16 C-Atomen gebunden sind.

2. Überzugsmittel nach Anspruch 1, dadurch gekennzeichnet, daß die Diamine der Formel (I) mindestens 2 Harnstoffgruppen enthalten.

3. Überzugsmittel nach Anspruch 1, dadurch gekennzeichnet, daß in der Formel (I) das Symbol Y für die Gruppe $—CH_2—CHOH—CH_2R^4$ steht, worin $R^4$ eine Hydroxyl-, Ether (—O-Alkyl) oder Ester(—OOC-Alkyl)-gruppe ist, deren Alkylrest 1 bis 18 C-Atome enthält.

4. Überzugsmittel nach Anspruch 1, dadurch gekennzeichnet, daß in der Formel (I) das Symbol Y für die Gruppe $—CH_2—CHOH—R^5$ steht, worin $R^5$ ein Wasserstoffatom oder eine Alkylgruppe mit 1 bis 18 C-Atomen ist.

5. Verwendung des Überzugsmittels nach Ansprüchen 1 bis 4 zur Herstellung von kathodisch abgeschiedenen Uberzügen auf elektrisch leitenden Substraten.

**Revendications**

1. Agent de revêtement aqueux életrodéposable à la cathode qui contient des pigments, des produits de remplissage, das inhibiteurs de protection contre la corrosion, des adjuvants de laquage, éventuellement des catalyseurs et en une quantité allant jusqu'à 20% en poids, par rapport au poids total de l'agent de revêtement, des solvants organiques et comme liants de résine synthétique

(A) de 55 à 95% en poids, par rapport à la quantité totale du liant de résine synthétique, d'un liant de résine synthétique contenant des groupes hydroxyle et amino tertiaires ainsi qu'éventuellement des groupes amino primaires et/ou secondaires avec une masse molaire moyenne ($\overline{M}n$) de 500 à 20 000, présentant un $pK_b$ allant de 3 à 7 et un indice d'hydroxyle allant de 50 à 400 et un indice d'amine allant de 30 à 150, et qui peut être rendu soluble dans l'eau par protonisation avec un acide, et

(B) de 5 à 45% en poids d'un agent de récticulation contenant des groupes ester aptes à la trans-estérification et/ou à la trans-admidation avec une masse molaire moyenne ($\overline{M}n$) de 350 à 5000, qui présente un indice d'ester de groupes ester réactifs en position finale de 30 à 500, de préférence de 100 à 250, les groupes ester étant largement stables en milieu aqueux neutre, mais réactifs en milieu basique à des températures supérieures à 140°C vis-à-vis des groupes hydroxyle, amino primaires et/ou secondaires du liant de résine synthétique A,

caractérisé en ce que le composant (A) contient en une quantité d'au moins 8% en poids, calculée sous la

forme des composés de formule I est par rapport au poids total du composant (A), au moins une diamine, grossissant la molécule, de formule

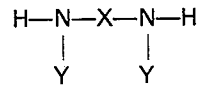

(I)

où le symbole Y représente $C_mH_{2m+1}$ (m = 1 à 8) ou un radical organique utilisé pour la défonctionnalisation, qui est formé par réaction du groupe amino primaire avec des monoépoxydes, et le symbole X représente un groupement moléculaire avec au moins un groupe urée, ces groupes étant liés sur les atomes d'azote de formule (I) par l'intermédiaire de groupes alcoylène en C1 à C16.

2. Agent de revêtement selon la revendication 1, caractérisé en ce que les diamines de formule (I) contiennent au moins 2 groupes urée.

3. Agent de revêtement selon la revendication 1, caractérisé en ce que dans la formule (I) le symbole Y représente le group $—CH_2CHOH—CH_2—R^4$, où $R^4$ est un groupe hydroxyle, éther (—O-alcoyle) ou ester (—OOC-alcoyle), dont le radical alcoyle contient de 1 à 18 atomes de carbone.

4. Agent de revêtement selon la revendication 1, caractérisé en ce que dans la formule (I) le symbole Y représente le groupe $—CH_2—CHOH—R^5$, où $R^5$ est un atome d'hydrogène ou un groupe alcoyle ayant de 1 à 18 atomes de carbone.

5. Application de l'agent de revêtement selon les revendications 1 à 4 à la préparation de revêtements déposables à la cathode sur des substrats conducteurs de l'électricité.

**Claims**

1. An aqueous, cathodically depositable electrodeposition lacquer coating composition containing pigments, fillers, corrosion inhibitors, lacquer auxiliaries, optionally catalysts and, in a quantity of up to 20% by weight based on the total weight of the coating composition, organic solvents and, as synthetic resin binder,

(A) from 55 to 95% by weight, based on the total quantity of synthetic resin binder, of a synthetic resin binder containing hydroxyl and tertiary amino groups and, optionally, primary and/or secondary amino groups, which has an average molecular weight ($\overline{M}n$) of from 500 to 20,000, a $pK_b$b-value of from 3 to 7, a hydroxyl number of from 50 to 400 and an amine number of from 30 to 150 and which may be made soluble in water by protonization with an acid, and

(B) from 5 to 45% by weight of a crosslinking agent containing ester groups capable of transesterification and/or transamidation, which has an average molecular weight ($\overline{M}n$) of from 350 to 5000 and an ester number of reactive terminal ester groups of from 30 to 500 and preferably from 100 to 250, the ester groups being largely stable in neutral, aqueous medium, but reactive to hydroxyl, primary and/or secondary amino groups of the synthetic resin binder A in basic medium at temperature about 140°C, characterized in that component (A) contains, in a quantity of at least 8% by weight, expressed as compounds of formula I and based on the total of component (A), at least one incorporated molecule-enlarging diamine corresponding to the following formula

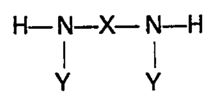

(I)

in which Y represents $C_mH_{2m+1}$ (m = 1 to 8) or an organic radical which is used for defunctionalization and which is formed by reaction of the primary amino group with monoepoxides, and X represents a molecular group containing at least one urea group, these groups being attached to the nitrogen atoms of formula (I) by the $C_1—C_{16}$ alkylene group.

2. A coating composition as claimed in Claim 1, characterized in that the diamines corresponding to formula (I) contain at least two urea groups.

3. A coating composition as claimed in Claim 1, characterized in that, in formula (I), Y represents the group $—CH_2—CHOH—CH_2R^4$ where $R^4$ is a hydroxyl, ether (—O-alkyl) or ester (—OOC-alkyl)-group of which the alkyl radical contains from 1 to 18 carbon atoms.

4. A coating composition as claimed in Claim 1, characterized in that, in formula (I), Y represents the group $—CH_2—CHOH—R^5$ where $R^5$ is a hydrogen atom or a $C_1—C_{18}$ alkyl group.

5. The use of the coating composition claimed in Claim 1 to 4 for the production of cathodically deposited coatings on electrically conductive substrates.